# EUROPEAN PATENT APPLICATION

(11) **EP 4 723 232 A1**
(43) Date of publication of application: **08.04.2026**
(21) Application number: 24906516.0
(22) Date of filing: 20.12.2024
(51) Int. Cl.: H01M 4/525, C01G 53/00, H01M 4/505, H01M 4/131, H01M 10/0525

(54) **OXIDE PRECURSOR, PREPARATION METHOD THEREFOR AND USE THEREOF**

(30) Priority: 20.12.2023 CN 202311756250
(71) Applicant: Ningbo Ronbay New Energy Technology Co., Ltd., Yuyao Ningbo, Zhejiang 315402 (CN)
(72) Inventor: CHEN, Junwei, Ningbo, Zhejiang 315402 (CN); YU, Jian, Ningbo, Zhejiang 315402 (CN); HUANG, Xiaoxiao, Ningbo, Zhejiang 315402 (CN); LIN, Zheqi, Ningbo, Zhejiang 315402 (CN); WANG, Biwu, Ningbo, Zhejiang 315402 (CN); GUO, Xiaohua, Ningbo, Zhejiang 315402 (CN); LEE, Jonghee, Ningbo, Zhejiang 315402 (CN)
(74) Representative: J A Kemp LLP
(86) International application number: PCT/CN2024/140919
(87) International publication number: WO 2025/131042

(57) **Abstract**

An oxide precursor, a preparation method thereof, and an application thereof are provided. The oxide precursor has a chemical general formula of NiₓCo_{y}Mn_{z}Al_{d}MₑOₙ, where 0 < x ≤ 0.96, 0 ≤ y ≤ 0.96, 0 ≤ z ≤ 0.96, 0 ≤ d ≤ 0.15, 0 < e ≤ 0.015, 0.6 ≤ n ≤ 1.6, x + y + z + d = 1, and y, z, d are not all zero, an ionic radius of a metal element M is greater than or equal to 0.08 nm; the metal element M has a distribution uniformity in the oxide precursor of greater than or equal to 98.5%. The oxide precursor has a uniformly distributed doping element M with a large ionic radius, which is beneficial to improving the structural stability of positive electrode materials, thereby enabling lithium-ion batteries to exhibit excellent discharge capacity and cycling performance.

## Description

This application claims priority to Chinese patent application No. 202311756250.3, filed with the China National Intellectual Property Administration on December 20, 2023, entitled "Oxide Precursor and Preparation Method and Application thereof", which is hereby incorporated by reference in its entirety.

### TECHNICAL FIELD

This present application relates to the technology field of lithium-ion batteries and, in particular, to an oxide precursor and a preparation method and an application thereof.

### BACKGROUND

Currently, doping-modified and layered lithium-ion positive electrode materials exhibit superior performance and have attracted widespread attention. Conventional doping ions include Mg²⁺, Fe²⁺, Co²⁺, Ni²⁺, Cu²⁺, Zn²⁺, Ti⁴⁺, etc. However, an element ion such as Ba²⁺ (ionic radius: 0.135 nm), Y³⁺ (ionic radius: 0.09 nm), Ag⁺ (ionic radius: 0.115 nm), Sr²⁺ (ionic radius: 0.118 nm), Cs⁺ (ionic radius: 0.167 nm), K⁺ (ionic radius: 0.138 nm), Na⁺ (ionic radius: 0.102 nm), or In³⁺ (ionic radius: 0.08 nm) has relatively large ionic radius, and is difficult to dope uniformly into a crystal phase. Furthermore, since a precursor for the preparation of a doping-modified positive electrode material is itself agglomerated particles with a certain particle size (8 µm - 15 µm), a diffusion path for a doping element is long. This easily leads to a phenomenon where the doping element in a surface has a concentration higher than that of the doping element in an interior, or where local enrichment occurs. This is not conducive to the full exertion of the modifying effect of the doping element in the positive electrode material, thereby affecting the cycling performance of lithium-ion batteries.

### SUMMARY

Based on this, it is necessary to provide an oxide precursor, a preparation method thereof, and an application thereof for the aforementioned problems. The oxide precursor has a uniformly distributed doping element M with a large ionic radius, which is beneficial to improving the structural stability of positive electrode materials, thereby enabling lithium-ion batteries to exhibit excellent discharge capacity and cycling performance.

An oxide precursor is provided, which has a chemical general formula of NiₓCo_{y}Mn_{z}Al_{d}MₑOₙ, where 0 < x ≤ 0.96, 0 ≤ y ≤ 0.96, 0 ≤ z ≤ 0.96, 0 ≤ d ≤ 0.15, 0 < e ≤ 0.015, 0.6 ≤ n ≤ 1.6, x + y + z + d = 1, and y, z, d are not all zero, an ionic radius of a metal element M is greater than or equal to 0.08 nm;
the metal element M has a distribution uniformity in the oxide precursor of greater than or equal to 98.5%.

In an embodiment, the oxide precursor has a D₅₀ of ≤ 2 µm.

In an embodiment, unit cell parameters of nickel oxide in the oxide precursor satisfy: 2.9553 Å ≤ a ≤ 2.9702 Å, 2.9553 Å ≤ b ≤ 2.9702 Å, 7.2285 Å ≤ c ≤ 7.2425 Å.

In an embodiment, in an X-ray diffraction pattern, a ratio of a diffraction peak intensity of a (012) crystal plane to a diffraction peak intensity of a (101) crystal plane of the oxide precursor is 1:1 - 2:1.

In an embodiment, in an X-ray diffraction pattern, compared with a diffraction peak of a (012) crystal plane of standard nickel oxide, a diffraction peak of a (012) crystal plane of the oxide precursor shifts toward a small angle, and a shift amount is less than or equal to 3°.

In an embodiment, the metal element M is selected from at least one of Ba, Y, Ag, Sr, Cs, K, Na, In, Ce, Tl, Bi, Sc, Yb, Tm, Er, Te, or Pd.

In an embodiment, the oxide precursor satisfies at least one of the following conditions:
(1) the oxide precursor has an apparent density of ≥ 0.4 g/cm³;
(2) the oxide precursor has a D₁₀ of ≤0.5 µm;
(3) the oxide precursor has a D₉₀ of ≤10 µm;
(4) the oxide precursor has a particle size distribution span value of ≤5, where the particle size distribution span value is (D₉₀ - D₁₀) / D₅₀.

In an embodiment, an overall distribution uniformity of each of Ni, Co, Mn, and Al elements in the oxide precursor is greater than or equal to 98%.

The oxide precursor described in the present application not only includes a doping element M with a large ionic radius in a specific ratio, but also exhibits excellent doping uniformity. When the oxide precursor is used for the preparation of a positive electrode material, on one hand, it enables the doping element M to uniformly act on a main phase of the positive electrode material, uniformly stabilizing the crystal structure; on the other hand, the uniformly distributed doping element M may make the stress distribution uniform, avoiding localized stress concentration that causes grain cracking, thereby improving the cycling capacity retention rate, and enabling lithium-ion batteries to exhibit excellent discharge capacity and cycling performance.

A preparation method for the oxide precursor as described above, including the following steps:
preparing a mixed metal salt solution based on NiₓCo_{y}Mn_{z}Al_{d}MₑOₙ, 0 < x ≤ 0.96, 0 ≤ y ≤ 0.96, 0 ≤ z ≤ 0.96, 0 ≤ d ≤ 0.15, 0 < e ≤ 0.015, 0.6 ≤ n ≤ 1.6, x + y + z + d = 1, and y, z, d are not all zero; and performing a co-precipitation reaction with a precipitant solution to obtain a hydroxide, the hydroxide has a D₅₀ of 0.2 µm - 1 µm;
sintering the hydroxide to obtain the oxide precursor.

In an embodiment, the co-precipitation reaction satisfies at least one of the following conditions:
(1) a molar ratio of metal ions in the mixed metal salt solution to hydroxide ions in the precipitant solution is 1:1 - 1:1.15;
(2) a total concentration of mixed metal salts in the mixed metal salt solution is 0.5 mol/L - 3 mol/L;
(3) a concentration of a precipitant in the precipitant solution is 0.5 mol/L - 6 mol/L;
(4) the precipitant in the precipitant solution is selected from at least one of potassium hydroxide, sodium hydroxide, or lithium hydroxide;
(5) the co-precipitation reaction is performed at a temperature of 25°C - 45°C for 3 h - 10 h.

In an embodiment, the step of sintering the hydroxide precipitate satisfies at least one of the following conditions:
(1) a volume of the hydroxide is 5% - 35% of a space volume for calcination reaction;
(2) the sintering is performed in an oxygen-containing gas, an oxygen content in the oxygen-containing gas is greater than or equal to 21%, and a flow rate of the oxygen-containing gas is 1 L/min - 30 L/min;
(3) the sintering is performed at a temperature of 350°C - 650°C for 1 h - 6 h.

A positive electrode material prepared from the oxide precursor as described above is provided, and the distribution uniformity of the metal element M in the positive electrode material is greater than or equal to 98.5%.

In an embodiment, a molar amount of the metal element M is 0.01 mol% - 1.5 mol% of a molar amount of other metal elements other than Li and M in the positive electrode material.

A positive electrode sheet is provided, including the positive electrode material as described above.

A lithium-ion battery is provided, including the positive electrode sheet as described above.

An electrical device is provided, including the lithium-ion battery as described above.

The preparation method described in the present application does not employ a complexing agent used in traditional preparation methods. Instead, it involves only the addition of a precipitating agent to rapidly form a small particle hydroxide with uniformly doped element M during the co-precipitation reaction. Subsequently, during the sintering of the hydroxide, the synergistic effect between the doping element M with a large ionic radius and the small particle size for providing a short diffusion path allows the doping element M to diffuse uniformly. This further enhances the uniform distribution effect of the doping element M, thereby producing an oxide precursor in which the doping element M with a large ionic radius is uniformly distributed. This method not only solves the problem in traditional doping processes that it is difficult to achieve uniform doping of an element with a large ionic radius, but also has a simple and easy-to-operate preparation process, with short processing time and high efficiency.

### BRIEF DESCRIPTION OF DRAWINGS

To describe the technical solutions in embodiments of the present application or in the prior art more clearly, the following briefly introduces the accompanying drawings needed for describing the embodiments or the prior art. Apparently, the accompanying drawings in the following description illustrate merely some embodiments described in the present application, and those skilled in the art may still derive other drawings from these accompanying drawings without creative effort.
FIG. 1 is a cross-sectional SEM image of an oxide precursor provided in Example 1.
FIG. 2 is a cross-sectional SEM image of an oxide precursor provided in Comparative Example 1.

### DESCRIPTION OF EMBODIMENTS

In order to facilitate a better understanding of the present application, the following provides a more detailed description of the present application. However, it should be understood that the present application may be implemented in many different forms and is not limited to embodiments or examples described herein. Rather, the purpose of providing these embodiments or examples is to make the disclosure of the present application completer and more comprehensive.

Unless otherwise defined, all technical and scientific terms used herein have the same meaning as commonly understood by those skilled in the art to which the present application pertains. The terms used herein are for the purpose of describing embodiments or examples only and are not intended to limit the present application. The term "and/or" as used herein includes any one of two or more related listed items, as well as arbitrary and all combinations of the related listed items, the arbitrary and all combinations include combinations of any two of the related listed items, any greater number of the related listed items, or all of the related listed items.

The present application provides an oxide precursor, which has a chemical general formula of NiₓCo_{y}Mn_{z}Al_{d}MₑOₙ, where 0 < x ≤ 0.96, 0 ≤ y ≤ 0.96, 0 ≤ z ≤ 0.96, 0 ≤ d ≤ 0.15, 0 < e ≤ 0.015, 0.6 ≤ n ≤ 1.6, x + y + z + d = 1, and y, z, d are not all zero, an ionic radius of a metal element M is greater than or equal to 0.08 nm.

At least 10 sample regions are selected from the oxide precursor. Based on a percentage by mass of the metal element M in a total elemental mass within any sample region, a standard deviation σ₁ ≤ 1.5%. A distribution uniformity of the metal element M in the oxide precursor is defined as 1 - σ₁, meaning that the distribution uniformity of the metal element M in the oxide precursor is greater than or equal to 98.5%.

It should be noted that Ni, Co, Mn, and Al are main elements, and the metal element M is a doping element. The oxide precursor may be selected from binary precursors with main elements of Ni and Co, Ni and Mn, or Ni and Al; ternary precursors with main elements of Ni, Co, and Mn; Ni, Co, and Al; or Ni, Mn, and Al; or quaternary precursors with main elements of Ni, Co, Mn, and Al.

The oxide precursor described in the present application not only includes a doping element M with a large ionic radius in a specific ratio, but also exhibits excellent doping uniformity. When the oxide precursor is used for the preparation of a positive electrode material, on one hand, it enables the doping element M to uniformly act on a main phase of the positive electrode material, uniformly stabilizing the crystal structure; on the other hand, the uniformly distributed doping element M may make the stress distribution uniform, avoiding localized stress concentration that causes grain cracking, thereby improving the cycling capacity retention rate, and enabling lithium-ion batteries to exhibit excellent discharge capacity and cycling performance.

In an embodiment, the oxide precursor has a D₅₀ of ≤ 2 µm, where D₅₀ refers to a particle size of oxide precursor particles corresponding to that a cumulative particle size distribution percentage thereof reaches 50%, and can be used to represent an average particle size. Since the oxide precursor has a small average particle size, it can provide a shorter diffusion path for the doping element M. Thus, under the synergistic effect of the doping element M with a large ionic radius and the oxide precursor with a small particle size, the distribution uniformity of the doping element M in the oxide precursor is further enhanced.

In an embodiment, in XRD testing, unit cell parameters of nickel oxide in the oxide precursor satisfy: 2.9553 Å ≤ a ≤ 2.9702 Å, 2.9553 Å ≤ b ≤ 2.9702 Å, 7.2285 Å ≤ c ≤ 7.2425 Å. Compared with unit cell parameters of nickel oxide (a = b = 2.9552 Å, c = 7.2275 Å) of a R-3m space group in a standard PDF card (PDF#44-1159), the unit cell parameters a, b, and c of the oxide precursor independently increase by 0.0001 Å - 0.015 Å, which is beneficial to synergistically regulating the uniformity of doping sites of the doping element M in the bulk phase of the oxide precursor, thereby further improving the uniformity of doping sites of the element M in the positive electrode material. More preferably, 2.9572 Å ≤ a ≤ 2.9632 Å, 2.9572 Å ≤ b ≤ 2.9632 Å, 7.2295 Å ≤ c ≤ 7.2355 Å, and a, b, and c independently increase by 0.002 Å - 0.008 Å.

In an embodiment, in an X-ray diffraction pattern, a ratio of a diffraction peak intensity of a (012) crystal plane to a diffraction peak intensity of a (101) crystal plane of the oxide precursor is 1:1 - 2:1, that is, I(012)/I(101) = 1.0 -2.0, enabling the oxide precursor to have an appropriate degree of crystallinity. This is beneficial to improving the quality and performance of the positive electrode material.

In an embodiment, in an X-ray diffraction pattern, compared with a diffraction peak of a (012) crystal plane of standard nickel oxide, a diffraction peak of the (012) crystal plane of the oxide precursor shifts toward a small angle, and a shift amount is less than or equal to 3°.

In an embodiment, the metal element M includes, but is not limited to, at least one of Ba, Y, Ag, Sr, Cs, K, Na, In, Ce, Tl, Bi, Sc, Yb, Tm, Er, Te, or Pd.

In an embodiment, the oxide precursor satisfies at least one of the following conditions:
(1) the oxide precursor has an apparent density of ≥ 0.4 g/cm³;
(2) the oxide precursor has a D₁₀ of ≤0.5 µm;
(3) the oxide precursor has a D₉₀ of ≤10 µm;
(4) the oxide precursor has a particle size distribution span value of ≤5, where the particle size distribution span value is (D₉₀ - D₁₀) / D₅₀.

By controlling the particle size distribution of the oxide precursor, the doping element M may diffuse more readily into the bulk phase of the positive electrode material. Meanwhile, controlling the oxide precursor to have a reasonable apparent density ensures an appropriate volume of the oxide precursor per unit mass, which is more conducive to improving the processing performance of the positive electrode material.

D₁₀ refers to a particle size of oxide precursor particles corresponding to that a cumulative particle size distribution percentage thereof reaches 10%; D₉₀ refers to a particle size of oxide precursor particles corresponding to that a cumulative particle size distribution percentage thereof reaches 90%.

In an embodiment, at least 10 sample regions are selected from the oxide precursor. Based on a percentage by sum of mass of Ni, Co, Mn, and Al elements in a total elemental mass within any sample region, a standard deviation σ₂ ≤ 2%. An overall distribution uniformity of Ni, Co, Mn, and Al elements in the oxide precursor is defined as 1 - σ₂, meaning that the overall distribution uniformity of Ni, Co, Mn, and Al elements in the oxide precursor is greater than or equal to 98%.

Traditionally, two routes are mainly included for doping modification of precursors. One route is, before the production of a positive electrode material via a high-temperature solid-state method, uniformly mixing an additive containing a doping element with a precursor synthesized by a co-precipitation method and a lithium source, and then sintering. Since the precursor itself is agglomerated particles with a certain particle size (8 µm - 15 µm), a diffusion path is long when the doping element enters the bulk phase of the positive electrode material through diffusion during the reaction stage, resulting in that uniform doping is difficult to achieve. Moreover, because simple mechanical mixing is used, the doping element is difficult to distribute uniformly within the precursor, making uniform doping likewise difficult to achieve. The other route is adjusting various condition parameters to make the doping element doped into a co-precipitation precursor during the preparation process of the co-precipitation precursor. However, due to the large number of parameters to be adjusted and their interactions, it is difficult to produce a consistent doped precursor. Furthermore, performing switching on the doping element or process requires readjustment, lacking universality and greatly increasing production difficulty.

Based on this, the present application provides a preparation method for the oxide precursor as described above, including the following steps:
S1, preparing a mixed metal salt solution based on NiₓCo_{y}Mn_{z}Al_{d}MₑOₙ, 0 < x ≤ 0.96, 0 ≤ y ≤ 0.96, 0 ≤ z ≤ 0.96, 0 ≤ d ≤ 0.15, 0 < e ≤ 0.015, 0.6 ≤ n ≤ 1.6, x + y + z + d = 1, and y, z, d are not all zero; and performing a co-precipitation reaction with a precipitant solution to obtain a hydroxide, the hydroxide has a D₅₀ of 0.2 µm - 1 µm;
S2, sintering the hydroxide to obtain the oxide precursor.

In step S1, without using a complexing agent as in traditional preparation methods, only a precipitating agent is added, enabling the hydroxide with a specific small particle size to be rapidly generated during the co-precipitation reaction, which is conducive to ensuring the uniformity of each element, and particularly enables the doping of metal element M to be uniform.

In an embodiment, the co-precipitation reaction satisfies at least one of the following conditions:
(1) a molar ratio of metal ions in the mixed metal salt solution to hydroxide ions in the precipitant solution is 1:1 - 1:1.15;
(2) a total concentration of mixed metal salts in the mixed metal salt solution is 0.5 mol/L - 3 mol/L;
(3) a concentration of a precipitant in the precipitant solution is 0.5 mol/L - 6 mol/L;
(4) the precipitant in the precipitant solution is selected from at least one of potassium hydroxide, sodium hydroxide, or lithium hydroxide;
(5) the co-precipitation reaction is performed at a temperature of 25°C - 45°C for 3 h - 10 h.

The co-precipitation reaction in the preparation method described in the present application is carried out at a temperature for a shorter time, and thus has milder conditions. This reduces processing costs while ensuring that the hydroxide has a certain particle size, and can maintain the uniformity of each element.

In an embodiment, a specific method of the co-precipitation reaction is preferably: co-currently feeding the mixed metal salt solution and the precipitating agent solution into a reaction apparatus.

It is understood that, after the co-precipitation reaction is completed, conventional treatment steps such as aging, washing, and drying are further included, which are not limited by the present application.

In step S2, during the sintering process of the hydroxide, the synergistic effect between the doping element M with a large ionic radius and the small particle size for providing a short diffusion path allows the doping element M to diffuse uniformly. This further enhances the uniform distribution effect of the doping element M, thereby producing an oxide precursor in which the doping element M with a large ionic radius is uniformly distributed.

In an embodiment, the step of sintering the hydroxide precipitate satisfies at least one of the following conditions:
(1) a volume of the hydroxide is 5% - 35% of a space volume for sintering reaction;
(2) the sintering is performed in an oxygen-containing gas, an oxygen content in the oxygen-containing gas is greater than or equal to 21%, and a flow rate of the oxygen-containing gas is 1 L/min - 30 L/min;
(3) the sintering is performed at a temperature of 350°C - 650°C for 1 h - 6 h.

A proportion of the volume of the hydroxide in the space volume for the sintering reaction is a filling rate of a reaction material.

By controlling the sintering temperature, time, filling rate of the reaction material, reaction gas, and gas flow rate, not only can uniform diffusion of the doping element M be ensured, but the oxide precursor can also achieve a certain particle size distribution, apparent density, and crystallinity. Additionally, this can also reduce sintering costs and is beneficial to industrial production.

It is understood that specific processes of the preparation method described in the present application include but are not limited to batch processes and continuous processes, and the present application does not limit this.

Therefore, the preparation method described in the present application not only solves the problem in traditional doping processes that it is difficult to achieve uniform doping of an element with a large ionic radius, but also has a simple and easy-to-operate preparation process, with short processing time and high efficiency.

The present application provides a positive electrode material prepared from the oxide precursor described above. At least 10 sample regions are selected from the oxide precursor. Based on a percentage by mass of the metal element M in a total elemental mass within any sample region, a standard deviation σ₃ ≤ 1.5%. A distribution uniformity of the metal element M in the oxide precursor is defined as 1 - σ₃, meaning that the distribution uniformity of the metal element M in the oxide precursor is greater than or equal to 98.5%.

The positive electrode material described in the present application not only has a uniform and stable crystal structure, but also exhibits uniform internal stress distribution. It is less likely to experience grain cracking and other undesirable phenomena during charge and discharge processes. This is beneficial to improving cycle capacity retention, enabling lithium-ion batteries to have excellent discharge capacity and cycling performance.

It should be noted that during the doping process, the metal element M may occupy lithium-ion sites, may occupy transition metal ion sites, or may simultaneously occupy both types of sites to form mixed doping sites. The present application does not limit this.

In an embodiment, a molar amount of the metal element M is 0.01 mol% - 1.5 mol% of a molar amount of other metal elements other than Li and M elements in the positive electrode material.

It should be noted that the present application does not limit the preparation method for the positive electrode material, and conventional processes can be used. For example: the oxide precursor described in the present application is thoroughly mixed with a lithium source in a molar ratio of 1:(1 - 1.5) to obtain a mixture; then the mixture is subjected to a high-temperature calcination at 650°C - 1000°C under an oxygen or air atmosphere to obtain the positive electrode material. Where a slight loss of the metal element M during the preparation process is compensated, and an additive containing the metal element M can additionally be added to the mixture. A molar ratio of the oxide precursor to the additive containing the metal element M is 1:(0.0001 - 0.05).

The present application provides a positive electrode sheet including the positive electrode material described above.

Specifically, the positive electrode sheet includes a positive electrode current collector and a positive electrode film layer provided on at least one surface of the positive electrode current collector, where the positive electrode film layer includes the positive electrode material described in the present application.

In one embodiment, the positive electrode current collector may be a metal foil or a composite current collector. For example, as a metal foil, aluminum foil may be used. The composite current collector includes a polymer material substrate and a metal layer formed on at least one surface of the polymer material substrate. The composite current collector can be formed by forming a metal material on the polymer material substrate. Optionally, the metal material includes, but is not limited to, one or more of aluminum, an aluminum-gold, nickel, a nickel alloy, tin, a tin alloy, silver, and a silver alloy. Optionally, the polymer material substrate includes, but is not limited to, one or more of polypropylene (PP), polyethylene terephthalate (PET), polybutylene terephthalate (PBT), polystyrene (PS), and polyethylene (PE).

In an embodiment, the positive electrode film layer mainly consists of the positive electrode material described in the present application, a binder, and a conductive agent. Optionally, the conductive agent includes, but is not limited to, at least one of carbon black, carbon dots, carbon nanotubes, graphene, and carbon nanofibers, where the carbon black includes superconducting carbon, acetylene black, or Ketjen black.

It should be noted that the present application does not limit the preparation method for the positive electrode sheet, and conventional processes can be used. For example: the positive electrode material, a conductive agent, a binder, and any other components are dispersed in a solvent to form a positive electrode slurry; the positive electrode slurry is coated onto a positive electrode current collector, and subjected to drying, cold pressing, and other processes, to obtain the positive electrode sheet. Optionally, the solvent includes, but is not limited to, N-methylpyrrolidone.

The present application provides a lithium-ion battery including the positive electrode sheet described above.

The lithium-ion battery is mainly composed of the positive electrode sheet, a negative electrode sheet, a separator, and an electrolyte solution, where the negative electrode sheet, the separator, and the electrolyte solution can be any conventional and commercially available negative electrode sheet (or negative electrode material), separator, and electrolyte solution, and the present application does not limit these.

The present application further provides an electrical device including the lithium-ion battery described above.

It is understood that the electrical device as described above include any device using the lithium-ion battery as described above, such as electric vehicles, power tools, electronic products, energy storage systems, and office equipment, but are not limited to these.

Below, the oxide precursor, preparation method thereof, and application thereof will be further described through the following specific embodiments. However, those skilled in the art will understand that the following embodiments are only for illustrating the present application and should not be regarded as limiting the scope of the present application. For embodiments where specific conditions are not specified, the conditions are conducted under conventional conditions or conditions recommended by manufacturers. Reagents or instruments where manufacturers are not specified are conventional products that are commercially available.

### Example 1

Nickel acetate, cobalt acetate, manganese acetate, and strontium chloride are prepared an aqueous solution with a total elemental concentration of 2 mol/L according to a molar ratio of the metal elements Ni:Co:Mn:Sr = 8:1:1:0.01; the aqueous solution and a 10 mol/L sodium hydroxide aqueous solution are simultaneously and co-currently fed into a reactor, where a co-precipitation reaction takes place under constant temperature 25°C with stirring for 8 hours; the produced hydroxide precipitate is filtered, washed, dried, and then loaded into a crucible, and the crucible is placed into an atmosphere furnace for sintering, where a reaction gas is pure oxygen with a flow rate of 5 L/min, a filling rate of the hydroxide in a furnace chamber is 20%, and a sintering condition is temperature holding at 350°C for 6 hours; finally, a strontium-doped oxide precursor in a Ni:Co:Mn molar ratio of 8:1:1 is obtained. Inductively coupled plasma optical emission spectrometry (ICP-OES/AES) analysis shows that a chemical general formula of the oxide precursor is Ni_{0.8}Co_{0.1}Mn_{0.1}Sr_{0.001}O_{1.001}.

The oxide precursor obtained in this example and lithium hydroxide monohydrate in a ratio of 1:1.01 between a molar amount of main element metals and a molar amount of lithium are thoroughly mixed in a high-speed mixer at 500 rpm for 30 minutes to obtain a mixture; the mixture is then subjected to high-temperature sintering in a box-type furnace under an oxygen atmosphere, where a sintering condition is temperature holding at 800°C for 16 hours, then subjected to natural cooling to room temperature, crushing and sieving, to obtain a positive electrode material.

### Example 2

Example 2 differs from Example 1 in that nickel acetate, cobalt acetate, manganese acetate, and strontium chloride are mixed according to a molar ratio of the metal elements Ni:Co:Mn:Sr = 8:1:1:0.02 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.8}Co_{0.1}Mn_{0.1}Sr_{0.002}O_{1.002}.

### Example 3

Example 3 differs from Example 1 in that nickel acetate, cobalt acetate, manganese acetate, and strontium chloride are mixed according to a molar ratio of the metal elements Ni:Co:Mn:Sr = 8:1:1:0.05 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.8}Co_{0.1}Mn_{0.1}Sr_{0.005}O_{1.005}.

### Example 4

Example 4 differs from Example 1 in that nickel acetate, cobalt acetate, manganese acetate, and strontium chloride are mixed according to a molar ratio of the metal elements Ni:Co:Mn:Sr = 6:1:3:0.02 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.6}Co_{0.1}Mn_{0.3}Sr_{0.002}O_{1.002}.

### Example 5

Example 5 differs from Example 1 in that nickel acetate, cobalt acetate, aluminum acetate, and strontium chloride are mixed according to a molar ratio of the metal elements Ni:Co:Al:Sr = 8:1:1:0.02 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.8}Co_{0.1}Al_{0.1}Sr_{0.002}O_{1.002}.

### Example 6

Example 6 differs from Example 1 in that nickel acetate, cobalt acetate, manganese acetate, and yttrium chloride are mixed according to a molar ratio of the metal elements Ni:Co:Mn:Y = 8:1:1:0.02 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.8}Co_{0.1}Mn_{0.1}Y_{0.002}O_{1.003}.

### Example 7

Example 7 differs from Example 1 in that nickel acetate, cobalt acetate, manganese acetate, and barium chloride are mixed according to a molar ratio of the metal elements Ni:Co:Mn:Ba = 8:1:1:0.02 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.8}Co_{0.1}Mn_{0.1}Ba_{0.002}O_{1.002}.

### Example 8

Example 8 differs from Example 1 in that nickel acetate, cobalt acetate, manganese acetate, and cerium chloride are mixed according to a molar ratio of the metal elements Ni:Co:Mn:Ce = 8:1:1:0.02 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.8}Co_{0.1}Mn_{0.1}Ce_{0.002}O_{1.004}.

### Example 9

Example 9 differs from Example 2 in that the co-precipitation reaction is performed at a temperature of 35°C.

### Example 10

Example 10 differs from Example 2 in that the co-precipitation reaction is performed at a temperature of 45°C.

### Example 11

Example 11 differs from Example 2 in that the co-precipitation reaction is performed for 3 hours.

### Example 12

Example 12 differs from Example 2 in that the co-precipitation reaction is performed for 5 hours.

### Example 13

Example 13 differs from Example 2 in that the co-precipitation reaction is performed for 10 hours.

### Example 14

Example 14 differs from Example 2 in that the sintering is performed at a temperature of 250°C.

### Example 15

Example 15 differs from Example 2 in that the sintering is performed at a temperature of 550°C.

### Example 16

Example 16 differs from Example 2 in that the sintering is performed for 2 hours.

### Example 17

Example 17 differs from Example 2 in that the sintering is performed for 4 hours.

### Example 18

Example 18 differs from Example 2 in that the sintering is performed for 8 hours.

### Example 19

Example 19 differs from Example 2 in that the reaction gas for sintering is air with an oxygen content of 21%.

Inductively coupled plasma optical emission spectrometry (ICP-OES/AES) analysis shows that a chemical general formula of the oxide precursor is Ni_{0.8}Co_{0.1}Mn_{0.1}Sr_{0.002}O_{0.6}.

### Example 20

Example 20 differs from Example 2 in that the reaction gas for sintering is air with an oxygen content of 50%.

Inductively coupled plasma optical emission spectrometry (ICP-OES/AES) analysis shows that a chemical general formula of the oxide precursor is Ni_{0.8}Co_{0.1}Mn_{0.1}Sr_{0.002}O_{0.8}.

### Example 21

Example 21 differs from Example 2 in that the flow rate of pure oxygen is 1 L/min.

Inductively coupled plasma optical emission spectrometry (ICP-OES/AES) analysis shows that a chemical general formula of the oxide precursor is Ni_{0.8}Co_{0.1}Mn_{0.1}Sr_{0.002}O_{0.9}.

### Example 22

Example 22 differs from Example 2 in that the flow rate of pure oxygen is 30 L/min.

Inductively coupled plasma optical emission spectrometry (ICP-OES/AES) analysis shows that a chemical general formula of the oxide precursor is Ni_{0.8}Co_{0.1}Mn_{0.1}Sr_{0.002}O_{1.6}.

### Example 23

Example 23 differs from Example 2 in that the filling rate of the hydroxide in the furnace chamber is 5%.

Inductively coupled plasma optical emission spectrometry (ICP-OES/AES) analysis shows that a chemical general formula of the oxide precursor is Ni_{0.8}Co_{0.1}Mn_{0.1}Sr_{0.002}O_{0.95}.

### Example 24

Example 24 differs from Example 2 in that the filling rate of the hydroxide in the furnace chamber is 35%.

Inductively coupled plasma optical emission spectrometry (ICP-OES/AES) analysis shows that a chemical general formula of the oxide precursor is Ni_{0.8}Co_{0.1}Mn_{0.1}Sr_{0.002}O_{1.2}.

### Example 25

Example 25 differs from Example 1 in that nickel acetate, cobalt acetate, and potassium chloride are mixed according to a molar ratio of the metal elements Ni:Co:K = 0.04:0.96:0.015 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.04}Co_{0.96}K_{0.015}O_{1.0075}.

### Example 26

Example 26 differs from Example 1 in that nickel acetate, manganese acetate, and cesium chloride are mixed according to a molar ratio of the metal elements Ni:Mn:Cs = 0.04:0.96:0.015 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.04}Mn_{0.96}Cs_{0.015}O_{1.0075}.

### Example 27

Example 27 differs from Example 1 in that nickel acetate, manganese acetate, aluminum acetate, and rubidium chloride are mixed according to a molar ratio of the metal elements Ni:Mn:Al:Rb = 0.5:0.35:0.15:0.01 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.5}Mn_{0.35}Al_{0.15}Rb_{0.01}O_{1.005}.

### Example 28

Example 28 differs from Example 1 in that nickel acetate, cobalt acetate, manganese acetate, aluminum acetate, and strontium chloride are mixed according to a molar ratio of the metal elements Ni:Co:Mn:Al:Sr = 0.96:0.02:0.01:0.01:0.001 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.96}Co_{0.02}Mn_{0.01}Al_{0.01}Sr_{0.001}O_{1.001}.

### Comparative Example 1

A mixed salt solution of Ni, Co, and Mn with a molar ratio of 8:1:1 is prepared to obtain a solution A with a concentration of 2 mol/L; a mixed salt solution of Ni, Co, Mn, and Sr with a molar ratio of 8:1:1:0.02 is prepared to obtain a solution B with a concentration of 2 mol/L; the solution A, an ammonia water complexing agent, and a sodium hydroxide precipitating agent are simultaneously and co-currently fed into a reactor; under heating and stirring conditions, the pH for the reaction process is controlled to enable co-precipitation and thus obtain a precursor C; the solution B, the ammonia water complexing agent, and the sodium hydroxide precipitating agent are simultaneously and co-currently fed into the reactor; under heating and stirring conditions, the pH for the reaction process is controlled to allow particles of the precursor C to continue growing; when a target particle size is reached, the particles of the precursor C are filtered, washed, dried, and sieved to obtain a strontium-doped oxide precursor. Inductively coupled plasma optical emission spectrometry (ICP-OES/AES) analysis shows that a chemical general formula of the oxide precursor is Ni_{0.8}Co_{0.1}Mn_{0.1}Sr_{0.001}O_{1.002}.

The oxide precursor obtained in this comparative example and lithium hydroxide monohydrate in a molar ratio of 1:1.01 between a molar amount of main element metals and a molar amount of lithium are thoroughly mixed in a high-speed mixer at 500 rpm for 30 minutes to obtain a mixture; the mixture is then subjected to high-temperature sintering in a box-type furnace under an oxygen atmosphere, where a sintering condition is temperature holding at 800°C for 16 hours, then subjected to natural cooling to room temperature, crushing and sieving, to obtain a positive electrode material.

### Comparative Example 2

A mixed salt solution of Ni, Co, and Mn is prepared with a molar ratio of 8:1:1 to obtain a solution A with a concentration of 2 mol/L; part of the solution A, an ammonia water complexing agent, and sodium hydroxide are simultaneously and co-currently fed into a reactor; under heating and stirring conditions, the pH for the reaction process is controlled to enable co-precipitation and thus obtain a precursor C; the remaining solution A, the ammonia water complexing agent, and a sodium hydroxide precipitating agent are simultaneously and co-currently fed into the reactor; under heating and stirring conditions, the pH for the reaction process is controlled to allow particles of the precursor C to continue growing; when a target particle size is reached, the particles of the precursor C are filtered, washed, dried, and sieved to obtain a binary oxide precursor. Inductively coupled plasma optical emission spectrometry (ICP-OES/AES) analysis shows that a chemical general formula of the oxide precursor is Ni_{0.8}Co_{0.1}Mn_{0.1}O₁.

The oxide precursor obtained in this comparative example, lithium hydroxide monohydrate, and strontium chloride a molar ratio of 1:1.01:0.001 are thoroughly mixed in a high-speed mixer at 500 rpm for 30 minutes to obtain a mixture; the mixture is then subjected to high-temperature sintering in a box-type furnace under an oxygen atmosphere, where a sintering condition is temperature holding at 800°C for 16 hours, then subjected to natural cooling to room temperature, crushing and sieving, to obtain a positive electrode material.

### Comparative Example 3

Comparative Example 3 differs from Example 1 in that nickel acetate, manganese acetate, aluminum acetate, and strontium chloride are mixed according to a molar ratio of the metal elements Ni:Mn:Al:Sr = 7:1:2:0.01 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.7}Mn_{0.1}Al_{0.2}Sr_{0.001}O_{1.001}.

### Comparative Example 4

Comparative Example 4 differs from Example 1 in that nickel acetate, cobalt acetate, manganese acetate, and strontium chloride are mixed according to a molar ratio of the metal elements Ni:Co:Mn:Sr = 8:1:1:0.2 to prepare an aqueous solution with a total elemental concentration of 2 mol/L.

Inductively coupled plasma optical emission spectrometry (ICP-OES/AES) analysis shows that a chemical general formula of the oxide precursor is Ni_{0.8}Co_{0.1}Mn_{0.1}Sr_{0.01}O_{1.02}.

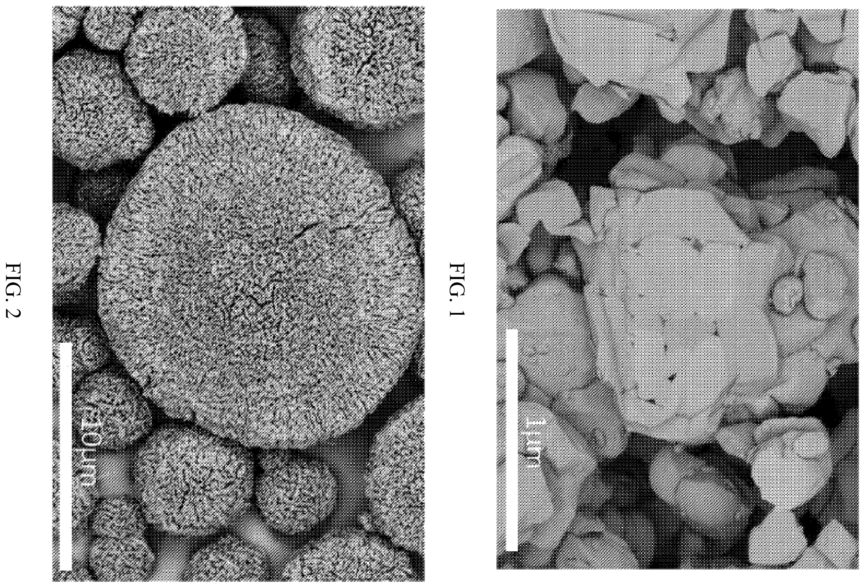

The oxide precursors prepared in Examples 1 to 28 and Comparative Examples 1 to 4 are tested, and the results are shown in FIGs. 1 to 2 and Tables 1 to 3.

**Table 1**

| Precursor sample | Element M | | Main element | |
|---|---|---|---|---|
| | Standard deviation(%) | Uniformity (%) | Standard deviation(%) | Uniformity (%) |
| Example 1 | 1.372 | 98.628 | 1.855 | 98.145 |
| Example 2 | 1.334 | 98.666 | 1.835 | 98.165 |
| Example 3 | 1.233 | 98.767 | 1.786 | 98.214 |
| Example 4 | 1.210 | 98.790 | 1.769 | 98.231 |
| Example 5 | 1.251 | 98.749 | 1.811 | 98.189 |
| Example 6 | 1.384 | 98.616 | 1.897 | 98.103 |
| Example 7 | 1.323 | 98.677 | 1.845 | 98.155 |
| Example 8 | 1.400 | 98.600 | 1.917 | 98.083 |
| Example 9 | 1.341 | 98.659 | 1.866 | 98.134 |
| Example 10 | 1.394 | 98.606 | 1.871 | 98.129 |
| Example 11 | 1.392 | 98.608 | 1.881 | 98.119 |
| Example 12 | 1.315 | 98.685 | 1.825 | 98.175 |
| Example 13 | 1.260 | 98.740 | 1.795 | 98.205 |
| Example 14 | 1.485 | 98.515 | 1.956 | 98.044 |
| Example 15 | 0.958 | 99.042 | 1.544 | 98.456 |
| Example 16 | 1.372 | 98.628 | 1.849 | 98.151 |
| Example 17 | 1.454 | 98.546 | 1.939 | 98.061 |
| Example 18 | 1.324 | 98.676 | 1.826 | 98.174 |
| Example 19 | 1.259 | 98.741 | 1.811 | 98.189 |
| Example 20 | 1.354 | 98.646 | 1.843 | 98.157 |
| Example 21 | 1.334 | 98.666 | 1.846 | 98.154 |
| Example 22 | 1.331 | 98.669 | 1.847 | 98.153 |
| Example 23 | 1.329 | 98.671 | 1.839 | 98.161 |
| Example 24 | 1.336 | 98.664 | 1.853 | 98.147 |
| Example 25 | 1.348 | 98.652 | 1.853 | 98.147 |
| Example 26 | 1.356 | 98.644 | 1.861 | 98.139 |
| Example 27 | 1.357 | 98.643 | 1.858 | 98.142 |
| Example 28 | 1.348 | 98.652 | 1.848 | 98.152 |
| Comparative Example 1 | 2.545 | 97.455 | 2.159 | 97.841 |
| Comparative Example 2 | 8.718 | 91.282 | 2.786 | 97.214 |
| Comparative Example 3 | 1.334 | 98.666 | 1.843 | 98.157 |
| Comparative Example 4 | 1.477 | 98.523 | 1.914 | 98.086 |

**Table 2**

| Precursor sample | Unit cell parameters of nickel oxide (Å) | | | (012) Shift amount(°) | I(012)/I(101) |
|---|---|---|---|---|---|
| | a | b | c | | |
| Example 1 | 2.9577 | 2.9574 | 7.2299 | 1.05 | 1.394 |
| Example 2 | 2.9598 | 2.9601 | 7.2321 | 1.58 | 1.404 |
| Example 3 | 2.9645 | 1.9644 | 7.2386 | 2.99 | 1.359 |
| Example 4 | 2.9596 | 2.9595 | 7.2322 | 1.56 | 1.345 |
| Example 5 | 2.9594 | 2.9595 | 7.2324 | 1.56 | 1.244 |
| Example 6 | 2.9615 | 2.9612 | 7.2331 | 1.59 | 1.401 |
| Example 7 | 2.9598 | 2.9597 | 7.2315 | 1.58 | 1.443 |
| Example 8 | 2.9586 | 2.9588 | 7.2314 | 1.59 | 1.424 |
| Example 9 | 2.9578 | 2.9578 | 7.2321 | 1.58 | 1.415 |
| Example 10 | 2.9577 | 2.9578 | 7.2334 | 1.55 | 1.400 |
| Example 11 | 2.9589 | 2.9589 | 7.2341 | 1.56 | 1.216 |
| Example 12 | 2.9614 | 2.9611 | 7.2324 | 1.60 | 1.544 |
| Example 13 | 2.9615 | 1.9614 | 7.2314 | 1.58 | 1.388 |
| Example 14 | 2.9554 | 2.9556 | 7.2290 | 0.956 | 1.491 |
| Example 15 | 2.9621 | 2.9621 | 7.2341 | 1.98 | 1.562 |
| Example 16 | 2.9573 | 2.9574 | 7.2298 | 1.26 | 1.716 |
| Example 17 | 2.9577 | 2.9579 | 7.2301 | 1.38 | 1.716 |
| Example 18 | 2.9578 | 2.9582 | 7.2321 | 1.58 | 1.716 |
| Example 19 | 2.9581 | 2.9582 | 7.2325 | 1.57 | 1244 |
| Example 20 | 2.9588 | 2.9592 | 7.2318 | 1.61 | 1.374 |
| Example 21 | 2.9579 | 2.9581 | 7.2325 | 1.57 | 1.241 |
| Example 22 | 2.9592 | 2.9595 | 7.2321 | 1.68 | 1.679 |
| Example 23 | 2.9591 | 2.9594 | 7.2320 | 1.58 | 1.713 |
| Example 24 | 2.9574 | 2.9576 | 7.2326 | 1.60 | 1.358 |
| Example 25 | 2.9602 | 2.9601 | 7.2335 | 1.71 | 1.414 |
| Example 26 | 2.9591 | 2.9588 | 7 2331 | 1.69 | 1.421 |
| Example 27 | 2.9588 | 2.9592 | 7.2329 | 1.64 | 1.419 |
| Example 28 | 2.9576 | 2.9575 | 7.2298 | 1.04 | 1.415 |
| Comparative Example 1 | 2.9552 | 2.9553 | 7.2286 | 0.15 | 2.045 |
| Comparative Example 2 | 2.9553 | 2.9552 | 7.2289 | 0.58 | 2.122 |
| Comparative Example 3 | 2.9561 | 2.9560 | 7.2291 | 0.63 | 1.408 |
| Comparative Example 4 | 2.9715 | 2.9716 | 7.2431 | 3.95 | 1.396 |

**Table 3**

| Precursor sample | D₅₀ (µm) | D₁₀ (µm) | D₉₀ (µm) | (D₉₀-D₁₀)/D₅₀ (µm) | Apparent density (g/cm³) |
|---|---|---|---|---|---|
| Example 1 | 1.854 | 0.391 | 8.214 | 4.220 | 0.562 |
| Example 2 | 1.821 | 0394 | 8.314 | 4.349 | 0.574 |
| Example 3 | 1.833 | 0.387 | 8.247 | 4.288 | 0.534 |
| Example 4 | 1.855 | 0.377 | 8.244 | 4.241 | 0.563 |
| Example 5 | 1.787 | 0.379 | 8.179 | 4.365 | 0.531 |
| Example 6 | 1.845 | 0.391 | 8.369 | 4.326 | 0.551 |
| Example 7 | 1.825 | 0.387 | 8.257 | 4.312 | 0.547 |
| Example 8 | 1.847 | 0.383 | 8.361 | 4.319 | 0.569 |
| Example 9 | 1.785 | 0.388 | 8.278 | 4.420 | 0.570 |
| Example 10 | 1.665 | 0.390 | 8.369 | 4.792 | 0.560 |
| Example 11 | 1.984 | 0.455 | 9.258 | 4.437 | 0.687 |
| Example 12 | 1.947 | 0.415 | 9.186 | 4.505 | 0.641 |
| Example 13 | 1.741 | 0.397 | 8.369 | 4.579 | 0.547 |
| Example 14 | 1.763 | 0.386 | 8.198 | 4.431 | 0.571 |
| Example 15 | 1.945 | 0.426 | 9.211 | 4.517 | 0.658 |
| Example 16 | 1.699 | 0.258 | 8.145 | 4.642 | 0.463 |
| Example 17 | 1.724 | 0.318 | 8.539 | 4.769 | 0.566 |
| Example 18 | 1.958 | 0.486 | 9.589 | 4.649 | 0.691 |
| Example 19 | 1.732 | 0.354 | 8.122 | 4.485 | 0.559 |
| Example 20 | 1.799 | 0.367 | 8.214 | 4.362 | 0.567 |
| Example 21 | 1.697 | 0.377 | 8.148 | 4.579 | 0.541 |
| Example 22 | 1.892 | 0.414 | 8.598 | 4.326 | 0.598 |
| Example 23 | 1.886 | 0.404 | 8.539 | 4.313 | 0.594 |
| Example 24 | 1.722 | 0.377 | 8.217 | 4.553 | 0.535 |
| Example 25 | 1.833 | 0.387 | 8.345 | 4.342 | 0.574 |
| Example 26 | 1.829 | 0.394 | 8.455 | 4.407 | 0.571 |
| Example 27 | 1.836 | 0.377 | 8.566 | 4.460 | 0.578 |
| Example 28 | 1.834 | 0.383 | 8.471 | 4.410 | 0.569 |
| Comparative Example 1 | 9.541 | 1.988 | 15.488 | 1.415 | 0.786 |
| Comparative Example 2 | 9.588 | 2.015 | 15.741 | 1.432 | 0.788 |
| Comparative Example 3 | 1.835 | 0.398 | 8.415 | 4.369 | 0.566 |
| Comparative Example 4 | 1.829 | 0.397 | 8.521 | 4.442 | 0.571 |

The positive electrode materials prepared in Examples 1 to 28 and Comparative Examples 1 to 4 are tested, and the results are shown in Table 4.

**Table 4**

| Positive electrode material sample | Element M | | Positive electrode material sample | Element M | |
|---|---|---|---|---|---|
| | Standard deviation (%) | Uniformity (%) | | Standard deviation (%) | Uniformity (%) |
| Example 1 | 1.076 | 98.924 | Example 17 | 1.198 | 98.802 |
| Example 2 | 0.966 | 99.034 | Example 18 | 1.167 | 98.833 |
| Example 3 | 1.087 | 98.913 | Example 19 | 1.044 | 98.956 |
| Example 4 | 1.123 | 98.877 | Example 20 | 1.011 | 98.989 |
| Example 5 | 0.961 | 99.039 | Example 21 | 0.999 | 99.001 |
| Example 6 | 0.993 | 99.007 | Example 22 | 1.056 | 98.944 |
| Example 7 | 1.162 | 98.838 | Example 23 | 1.007 | 98.993 |
| Example 8 | 1.003 | 98.997 | Example 24 | 1.017 | 98.983 |
| Example 9 | 0.961 | 99.039 | Example 25 | 0.991 | 99.009 |
| Example 10 | 1.107 | 98.893 | Example 26 | 1.011 | 98.989 |
| Example 11 | 0.986 | 99.014 | Example 27 | 1.031 | 98.969 |
| Example 12 | 1.020 | 98.980 | Example 28 | 1.021 | 98.979 |
| Example 13 | 1.161 | 98.839 | Comparative Example 1 | 5.124 | 94.876 |
| Example 14 | 1.358 | 98.642 | Comparative Example 2 | 8.647 | 91.353 |
| Example 15 | 0.755 | 99.245 | Comparative Example 3 | 1.195 | 98.805 |
| Example 16 | 1.266 | 98.734 | Comparative Example 4 | 1.245 | 98.755 |

### Application Example

The positive electrode materials prepared in Examples 1 to 28 and Comparative Examples 1 to 4 are respectively used to fabricate coin-type half-cells. Each of the coin-type half-cells is prepared by the following steps:
conductive carbon black SP (particle size 40 nm) and PVDF (molecular weight 900,000) in a ratio of 90%:5%:5% are dissolved in a n-methy-1,2-pyrrolidone (NMP) solvent, and are stirred in a dry room (dew point temperature -45°C, room size 15 m³) to obtain a uniform positive electrode slurry; the cathode slurry is coated onto an aluminum foil current collector (thickness 12 µm, purity 99.5%); the aluminum foil current collector is then cut into plates with a diameter of 12 mm to form a positive electrode sheet with a mass loading of 8.5 ± 0.15 mg/cm²; the positive electrode sheet, a counter electrode that is a lithium metal disc with a diameter of 11 mm (thickness 0.3 mm, purity 99.9%), and an electrolyte solution that is 1 mol/L LiPF₆ in ethyl carbonate/diethyl carbonate (EC/DEC, volume ratio 1:1, H₂O < 10 ppm) are assembled into a 2032-type coin half-cell in an argon-filled glovebox (contents of water and oxygen are both smaller than 0.1 ppm).

The assembled cell is subjected to the following performance tests, and the results are shown in Table 5.
(1) Cycle performance test: the cell is charged at 1C and discharged at 1C, and is subjected to charge-discharge cycling under a cut-off current of 0.05C at an ambient temperature of 25°C ± 2°C, where a voltage range is 2.8 V - 4.25 V. After 100 cycles, a capacity retention rate is calculated, which is a ratio of a discharge capacity at the 100th cycle to a discharge capacity at the 1st cycle.
(2) Discharge capacity: a charge-discharge test is carried out at 0.2C within a voltage range of 2.8V to 4.25V to determine a specific capacity.

**Table 5**

| | Discharge capacity (%) | Capacity retention rate (%) | | Discharge capacity (%) | Capacity retention rate (%) |
|---|---|---|---|---|---|
| Example 1 | 189.25 | 95.15 | Example 17 | 189.83 | 96.65 |
| Example 2 | 189.67 | 96.81 | Example 18 | 189.83 | 96.25 |
| Example 3 | 188.66 | 96.91 | Example 19 | 189.54 | 96.25 |
| Example 4 | 185.04 | 97.63 | Example 20 | 189.45 | 96.55 |
| Example 5 | 189.48 | 96.44 | Example 21 | 189.59 | 95.44 |
| Example 6 | 189.54 | 96.92 | Example 22 | 189.79 | 96.77 |
| Example 7 | 188.55 | 96.34 | Example 23 | 189.77 | 96.77 |
| Example 8 | 190.20 | 96.33 | Example 24 | 189.47 | 96.24 |
| Example 9 | 189.56 | 96.59 | Example 25 | 178.76 | 96.69 |
| Example 10 | 189.79 | 96.59 | Example 26 | 172.68 | 96.48 |
| Example 11 | 189.74 | 96.94 | Example 27 | 180.45 | 96.78 |
| Example 12 | 189.60 | 96.23 | Example 28 | 198.01 | 96.45 |
| Example 13 | 189.12 | 96.17 | Comparative Example 1 | 186.31 | 94.92 |
| Example 14 | 189.89 | 96.53 | Comparative Example 2 | 187.51 | 93.23 |
| Example 15 | 190.31 | 96.22 | Comparative Example 3 | 182.31 | 93.54 |
| Example 16 | 189.83 | 96.80 | Comparative Example 4 | 186.49 | 93.24 |

All technical features of the above-mentioned embodiments may be combined in any way. In order to keep the description concise, not all possible combinations of the technical features in the above embodiments are described. However, as long as the combinations of these technical features have no contradiction, they should be considered as falling within the scope described in this specification.

The above embodiments merely describe several implementation methods of the present application and are described in a relatively specific and detailed manner, while this shall not be understood as a limitation on the scope of the present application patent. It should be noted that, for those skilled in the art, various modifications and improvements may be made without departing from the concept of the present application. All of these modifications and improvements are within the protection scope of the present application. Therefore, the protection scope of the present application patent shall be determined by the appended claims.

## Claims

1. An oxide precursor, wherein the oxide precursor has a chemical general formula of NiₓCo_{y}Mn_{z}Al_{d}MₑOₙ, where 0 < x ≤ 0.96, 0 ≤ y ≤ 0.96, 0 ≤ z ≤ 0.96, 0 ≤ d ≤ 0.15, 0 < e ≤ 0.015, 0.6 ≤ n ≤ 1.6, x + y + z + d = 1, and y, z, d are not all zero, an ionic radius of a metal element M is greater than or equal to 0.08 nm;
the metal element M has a distribution uniformity in the oxide precursor of greater than or equal to 98.5%.

2. The oxide precursor according to claim 1, wherein the oxide precursor has a D₅₀ of ≤ 2 µm.

3. The oxide precursor according to claim 1, wherein unit cell parameters of nickel oxide in the oxide precursor satisfy: 2.9553 Å ≤ a ≤ 2.9702 Å, 2.9553 Å ≤ b ≤ 2.9702 Å, 7.2285 Å ≤ c ≤ 7.2425 Å.

4. The oxide precursor according to claim 1, wherein in an X-ray diffraction pattern, a ratio of a diffraction peak intensity of a (012) crystal plane to a diffraction peak intensity of a (101) crystal plane of the oxide precursor is 1:1 - 2:1.

5. The oxide precursor according to claim 1, wherein in an X-ray diffraction pattern, compared with a diffraction peak of a (012) crystal plane of standard nickel oxide, a diffraction peak of a (012) crystal plane of the oxide precursor shifts toward a small angle, and a shift amount is less than or equal to 3°.

6. The oxide precursor according to claim 1, wherein the metal element M is selected from at least one of Ca, Sn, Cd, Ba, Y, Ag, Sr, Cs, K, Na, In, Ce, Tl, Bi, Sc, Yb, Tm, Er, Te, or Pd.

7. The oxide precursor according to claim 1, wherein the oxide precursor satisfies at least one of the following conditions:
(1) the oxide precursor has an apparent density of ≥ 0.4 g/cm³;
(2) the oxide precursor has a D₁₀ of ≤0.5 µm;
(3) the oxide precursor has a D₉₀ of ≤10 µm;
(4) the oxide precursor has a particle size distribution span value of ≤5, where the particle size distribution span value is (D₉₀ - D₁₀) / D₅₀.

8. The oxide precursor according to claim 1, wherein an overall distribution uniformity of each of Ni, Co, Mn, and Al elements in the oxide precursor is greater than or equal to 98%.

9. A preparation method for the oxide precursor according to any one of claims 1 to 8, comprising the following steps:
preparing a mixed metal salt solution based on NiₓCo_{y}Mn_{z}Al_{d}MₑOₙ, 0 < x ≤ 0.96, 0 ≤ y ≤ 0.96, 0 ≤ z ≤ 0.96, 0 ≤ d ≤ 0.15, 0 < e ≤ 0.015, 0.6 ≤ n ≤ 1.6, x + y + z + d = 1, and y, z, d are not all zero; and performing a co-precipitation reaction with a precipitant solution to obtain a hydroxide, the hydroxide has a D₅₀ of 0.2 µm - 1 µm;
sintering the hydroxide to obtain the oxide precursor.

10. The preparation method for the oxide precursor according to claim 9, wherein the co-precipitation reaction satisfies at least one of the following conditions:
(1) a molar ratio of metal ions in the mixed metal salt solution to hydroxide ions in the precipitant solution is 1:1 - 1:1.15;
(2) a total concentration of mixed metal salts in the mixed metal salt solution is 0.5 mol/L - 3 mol/L;
(3) a concentration of a precipitant in the precipitant solution is 0.5 mol/L - 6 mol/L;
(4) the precipitant in the precipitant solution is selected from at least one of potassium hydroxide, sodium hydroxide, or lithium hydroxide;
(5) the co-precipitation reaction is performed at a temperature of 25°C - 45°C for 3 h - 10 h.

11. The preparation method for the oxide precursor according to claim 9, wherein the step of the sintering the hydroxide precipitate satisfies at least one of the following conditions:
(1) a volume of the hydroxide is 5% - 35% of a space volume for sintering reaction;
(2) the sintering is performed in an oxygen-containing gas, an oxygen content in the oxygen-containing gas is greater than or equal to 21%, and a flow rate of the oxygen-containing gas is 1 L/min - 30 L/min;
(3) the sintering is performed at a temperature of 350°C - 650°C for 1 h - 6 h.

12. A positive electrode material, wherein the positive electrode material is prepared from the oxide precursor according to any one of claims 1 to 8, and the distribution uniformity of the metal element M in the positive electrode material is greater than or equal to 98.5%.

13. The positive electrode material according to claim 12, wherein a molar amount of the metal element M is 0.01 mol% - 1.5 mol% of a molar amount of other metal elements other than Li and M in the positive electrode material.

14. A positive electrode sheet, comprising the positive electrode material according to claim 12 or 13.

15. A lithium-ion battery, comprising the positive electrode sheet according to claim 14.

16. An electrical device, comprising the lithium-ion battery according to claim 15.
